# FASCICULE DE BREVET EUROPEEN

(11) **EP 3 080 557 B1**
(45) Date de publication et mention de la délivrance du brevet: **21.02.2018**
(21) Numéro de dépôt: 14835706.4
(22) Date de dépôt: 11.12.2014
(51) Int. Cl.: G01D 11/24

(54) **CAPTEUR DE MESURE**
MESSSENSOR
MEASUREMENT SENSOR

(30) Priorité: 12.12.2013 FR 1362501; 12.12.2013 FR 1362500
(43) Date de publication de la demande: 19.10.2016
(73) Titulaire: SC2N, 94046 Creteil Cedex (FR)
(72) Inventeur: GUEGUEN, Olivier, F-14210 Baron sur Odon (FR); GRONIER, Mathieu, F-14190 Saint-germain-le-Vasson (FR)
(74) Mandataire: Garcia, Christine
(86) Numéro de dépôt international: PCT/FR2014/053275
(87) Numéro de publication internationale: WO 2015/087002

(56) Documents cités:
- FR-A1- 2 913 808
- US-A1- 2004 104 458
- US-A1- 2012 012 949

## Description

La présente invention a pour objet un capteur de mesure, et notamment un capteur de pression et/ou de température.

Les capteurs de mesure comprennent généralement différents composants sensibles, comme par exemple des circuits imprimés, qui doivent être protégés des attaques extérieures par un matériau d'enrobage, typiquement une résine thermodurcissable. Par exemple, dans le cas d'un capteur de pression et de température utilisé dans un collecteur d'admission, les composants doivent être protégés des attaques acides des condensats (acides, sulfures, ...) issus de la combustion du carburant.

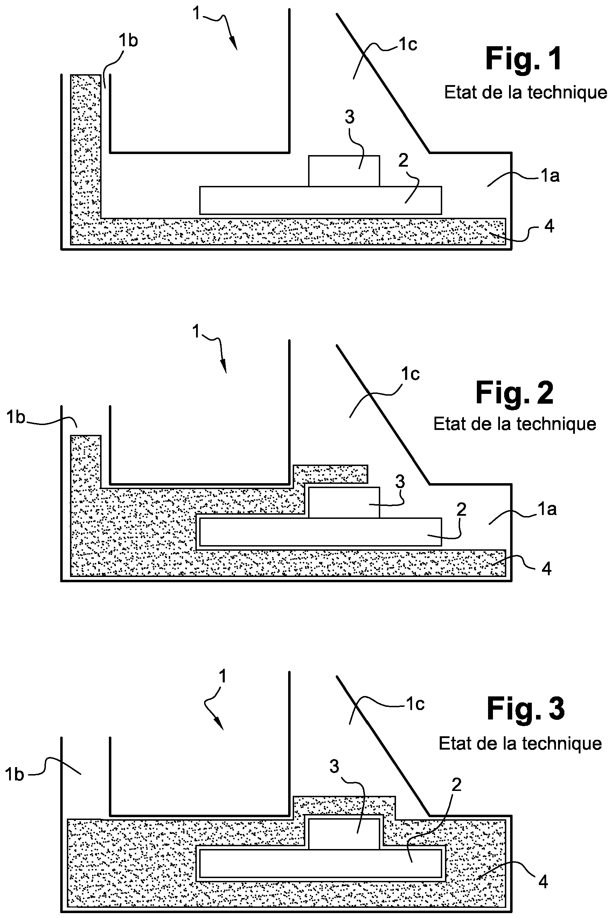

La figure 1 illustre schématiquement en coupe verticale un capteur de mesure 1 de l'état de la technique. Le capteur 1 comprend une cavité la, une ouverture d'injection 1b de matériau d'enrobage, l'ouverture étant située au-dessus de la cavité 1a et débouchant dans la cavité 1a, ainsi qu'un zone d'évacuation d'air 1c débouchant dans la cavité 1a.

Dans la cavité 1a est disposé un composant sensible, qui est par exemple un circuit imprimé 2, et sur le circuit imprimé 2, un composant de mesure 3 de pression est situé dans l'alignement de la zone d'évacuation d'air 1c. La zone d'évacuation d'air 1c est située en vis-à-vis du composant 3 de manière à permettre au composant 3 d'effectuer une mesure.

La figure 1 montre le début de l'injection d'un matériau d'enrobage 4, typiquement un matériau d'enrobage thermodurcissable, comme par exemple une résine liquide thermodurcissable, destiné à enrober le circuit imprimé 2. On peut injecter un mélange d'un matériau d'enrobage thermodurcissable, mono- ou bi-composant (une résine avec un durcisseur). La résine 4 est injectée par l'ouverture 1b et s'écoule par gravité dans la cavité 1a.

A la fin de l'injection de la résine 4, tel qu'illustré à la figure 2, sur laquelle les éléments identiques à ceux de la figure 1 portent les mêmes références, la résine 4 s'est écoulée dans la cavité la et recouvre le circuit imprimé 2. Un risque existe, lors de l'injection de la résine 4, consistant à venir recouvrir le composant 3. Or, si le composant de mesure 3 est recouvert de résine 4, il ne fonctionne plus. Ce recouvrement du composant 3 peut être par exemple du à la présence localement d'une vague que fait la résine lors de son écoulement. Ce risque peut être favorisé, aggravé dans certaines conditions de pression d'injection de la résine et/ou peut être dû à la viscosité de celle-ci. Ces paramètres d'injection sont difficilement maîtrisables ce qui rend le procédé de fabrication de tels capteurs complexe et couteux. Le document US 2012/012949 A1 décrit un capteur de pression comprenant une cavité dans laquelle un substrat se situe en dessous d'un composant de mesure. Lors de la fabrication du capteur, un matériau d'enrobage est injecté dans la cavité par un orifice d'injection. Le matériau d'enrobage entoure le substrat, et une prise de pression est laissée libre à l'aide d'une collerette de protection, gardant ainsi à découvert le composant de mesure. La figure 3 illustre l'état final du capteur de mesure 1 lorsque la résine 4 s'est complètement écoulée dans la cavité 1a. La résine 4 à l'équilibre recouvre ici complètement le composant de mesure 3, ce qui rend impossible la mesure de pression.

La présente invention vise à remédier à ces inconvénients.

L'invention propose en particulier un capteur de mesure permettant d'éviter un recouvrement, même temporaire, des composants de mesure par le matériau d'enrobage des composants sensibles, suite à l'injection du matériau d'enrobage.

L'invention a ainsi pour objet un capteur de mesure, comprenant :
- une cavité dans laquelle se situent au moins un composant sensible et au moins un composant de mesure, la cavité recevant un matériau d'enrobage, notamment une résine, recouvrant le composant sensible et laissant à découvert au moins partiellement le composant de mesure,
- un bassin de dépôt du matériau d'enrobage, communiquant avec la cavité de manière à permettre, après le dépôt du matériau dans le bassin, l'écoulement du matériau d'enrobage dans la cavité,

Conformément à l'invention, le bassin de dépôt présente un volume choisi de manière à permettre de recevoir tout le matériau d'enrobage lors du dépôt du matériau, le bassin étant au moins partiellement vidé à l'issue de l'écoulement du matériau d'enrobage dans la cavité. Un tel bassin permet de recevoir l'intégralité du matériau d'enrobage avant même que celui-ci ne s'écoule à l'intérieur de la cavité. Ainsi, le matériau peut s'écouler par simple gravité et éviter de venir créer une vague, la vaque pouvant venir recouvrir le composant de mesure. Le procédé de fabrication d'un tel capteur comportant un tel bassin permet d'éviter d'avoir recours à une injection de matériaux simultanément à l'écoulement.

Le capteur peut comprendre :
- au moins une ouverture (1c) communiquant avec la cavité (1a) et située en vis-à-vis du composant de mesure (3) pour permettre au composant de mesure (3) d'effectuer une mesure,
- au moins un orifice de purge (1d) distinct de l'ouverture (1c), situé sur le chemin d'écoulement du matériau d'enrobage (4), de manière à permettre une purge d'au moins une partie de l'air présent dans la cavité (1a) lors de l'écoulement du matériau d'enrobage (4).

L'effet d'un tel orifice est de permettre une purge d'au moins une partie de l'air présent dans la cavité, au niveau dudit orifice. Ceci permet de favoriser la purge de la cavité lorsque le matériau d'enrobage pénètre dans cette cavité. Cette purge peut avantageusement être réalisée localement dans une zone dans laquelle une vague peut avoir comme conséquence le recouvrement du composant de mesure.

En d'autres termes, un tel orifice permet de localiser judicieusement la zone dans laquelle la purge est réalisée.

Le matériau d'enrobage, notamment la résine peut être choisie dans le groupe constitué par une résine époxy, silicone ou polyuréthane, mono- ou bi-composants.

Le nombre d'orifices de purge peut être au moins égal à deux, notamment égal à 3, par exemple égal à 4.

Le diamètre de l'orifice de purge peut être compris entre 0,2mm et 10mm, notamment entre 05mm et 3mm.

L'orifice de purge peut être formé à une extrémité d'une colonne d'évent du capteur, permettant au matériau d'enrobage de monter par capillarité lors de l'écoulement du matériau d'enrobage.

L'orifice de purge peut également être formé par une paroi, notamment plane, du capteur.

Le ou les orifices de purge peuvent être situés autour du composant de mesure.

Le ou les orifices de purge peuvent être situés en vis-à-vis du pourtour du composant de mesure.

Avantageusement, le ou les orifices peuvent être situés en vis-à-vis d'une zone située à une distance comprise entre 10mm et 40mm du pourtour du composant de mesure.

En variante, le ou les orifices peuvent être situés en vis-à-vis d'une zone située à une distance d'au moins 10mm du pourtour du composant de mesure, notamment à une distance d'au moins 40mm.

Le composant de mesure peut être un capteur de pression.

Le composant sensible est du type circuit imprimé.

Le capteur peut comprendre en outre un connecteur électrique relié au circuit imprimé.

Le bassin de dépôt peut déboucher dans une extrémité latérale de la cavité, de manière à permettre un écoulement latéral horizontal du matériau d'enrobage dans la cavité après son injection.

Le capteur peut comprendre en outre une zone d'évacuation d'air communiquant avec la cavité. Une telle zone permet de libérer l'air présent dans la cavité avant que le matériau n'ait coulé dans la cavité.

La zone d'évacuation peut être distincte du bassin.

La zone d'évacuation peut être en vis-à-vis du composant de mesure.

Le capteur peut comprendre en outre un capteur de température.

Le capteur de température peut être partiellement logé dans la zone d'évacuation.

Le capteur peut comporter un bassin de dépôt du matériau d'enrobage, le bassin communiquant avec la cavité de manière à permettre l'écoulement du matériau d'enrobage dans la cavité.

L'orifice de purge peut être distinct du bassin et distinct de l'ouverture.

Le volume du bassin de dépôt peut être compris entre 50 mm³ et 5000 mm³, et notamment entre 500 mm³ et 2000 mm³, notamment entre 850 mm³ et 1 200 mm³.

Le bassin de dépôt peut être séparé de la cavité par une cloison perforée. Une telle cloison permet de contrôler le débit lors de l'écoulement du matériau.

En fin d'écoulement du matériau d'enrobage, une partie de ce matériau peut rester dans le fond du bassin de dépôt.

Le bassin de dépôt peut être en forme de cheminée munie de parois verticales et présentant une ouverture dans sa partie inférieure qui débouche dans la cavité.

L'invention a également pour objet un procédé de remplissage en matériau d'enrobage, et notamment de résine, d'un capteur de mesure décrit ci-dessus.

Le procédé selon l'invention comprend l'injection de matériau d'enrobage dans le bassin de dépôt.

Le procédé peut comprendre, postérieurement à l'étape d'injection de matériau d'enrobage, une étape d'écoulement du matériau d'enrobage dans la cavité, conduisant à une position d'équilibre du matériau d'enrobage dans laquelle le matériau d'enrobage recouvre chaque composant sensible sans recouvrir le ou les composants de mesure, puis une étape de durcissement du matériau d'enrobage.

D'autres caractéristiques et avantages de la présente invention apparaîtront plus clairement à la lecture de la description suivante donnée à titre d'exemple illustratif et non limitatif et faite en référence aux dessins annexés sur lesquels :
- les figures 1 à 3, déjà décrites, sont des vues schématiques en coupe d'un capteur de mesure de l'état de la technique lors de différentes étapes de remplissage du capteur en matériau d'enrobage,
- les figures 4 à 6 sont des vues schématiques en coupe d'un capteur de mesure selon l'invention lors de différentes étapes de remplissage du capteur en matériau d'enrobage, conformément à un premier mode de réalisation,
- les figures 7 à 9 sont des vues schématiques en coupe d'un capteur de mesure selon l'invention lors de différentes étapes de remplissage du capteur en matériau d'enrobage, conformément à un deuxième mode de réalisation,

- la figure 10 est une vue en perspective du capteur de mesure selon l'invention, et
- la figure 11 illustre un exemple de mise en oeuvre du capteur selon l'invention.

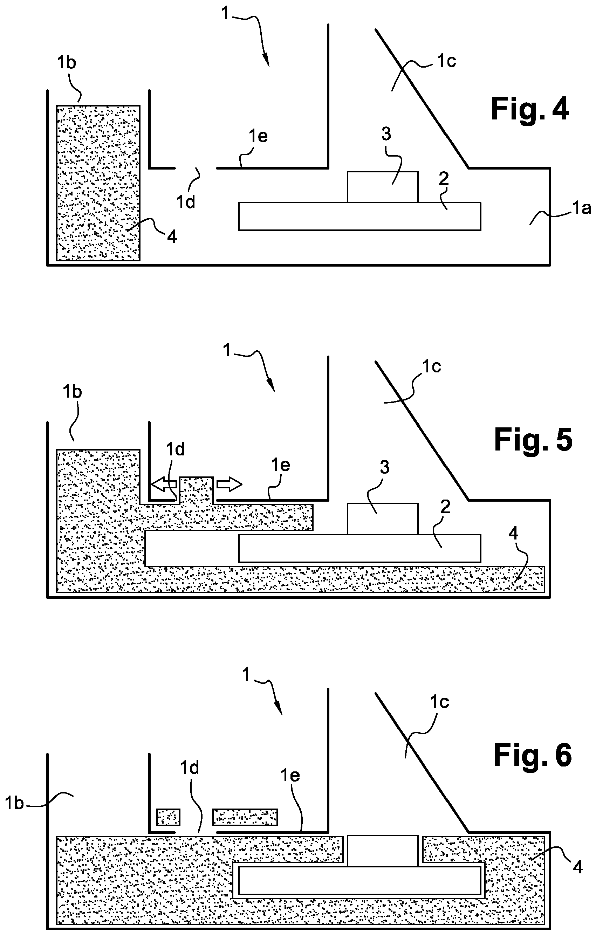

Tel qu'illustré à la figure 4, sur laquelle les éléments identiques à ceux des figures 1 à 3 portent les mêmes références, un capteur de mesure 1 selon l'invention est doté d'un bassin 1b dont le volume permet de préférence de recevoir toute la résine lors du début de l'injection de celle-ci. Le bassin de dépôt 1b peut déboucher dans une extrémité latérale de la cavité 1a.

Ainsi, lors de l'injection de la résine 4 dans le bassin de dépôt 1b, la résine 4 s'écoule par gravité vers le fond de la cavité 1a.

Comme représenté à la figure 5, la résine 4 est en cours d'écoulement latéral horizontal dans le reste de la cavité 1a.

Le capteur 1 comprend ici un orifice de purge 1d communiquant avec la cavité. Cet orifice, distinct de l'ouverture 1c, est situé sur le chemin d'écoulement de la résine 4, ce qui permet une purge d'au moins une partie de l'air présent dans la cavité 1a lors de l'écoulement de la résine 4. Lors de cette purge d'air, la résine 4 qui se trouve au niveau de l'orifice 1d est évacuée via l'orifice 1d ce qui permet d'éviter le recouvrement d'un composant de mesure 3, par exemple un composant électronique de mesure tel qu'un capteur, par la résine 4 lors de l'écoulement de la résine 4. Conformément à un premier mode de réalisation, tel qu'illustré à la figure 5, l'orifice de purge 1d, qui peut être de forme circulaire, est formé dans une paroi 1e, notamment plane et horizontale, du capteur 1. La résine 4 est évacuée autour de l'orifice 1d, sur la surface supérieure de la paroi 1e.

La figure 6 illustre l'état final du capteur de mesure 1 lorsque la résine 4 s'est complètement écoulée dans la cavité 1a. La résine 4 à l'équilibre se situe au-dessus et en dessous du circuit imprimé 2, mais elle ne recouvre pas la surface supérieure du composant de mesure3 qui et opposée à la face avec laquelle elle est en contact avec le circuit 2, ce qui rend possible la mesure de pression. Il reste également de la résine 4 autour de l'orifice 1d, sur la surface supérieure de la paroi 1e.

Le procédé s'achève avec le durcissement de la résine 4.

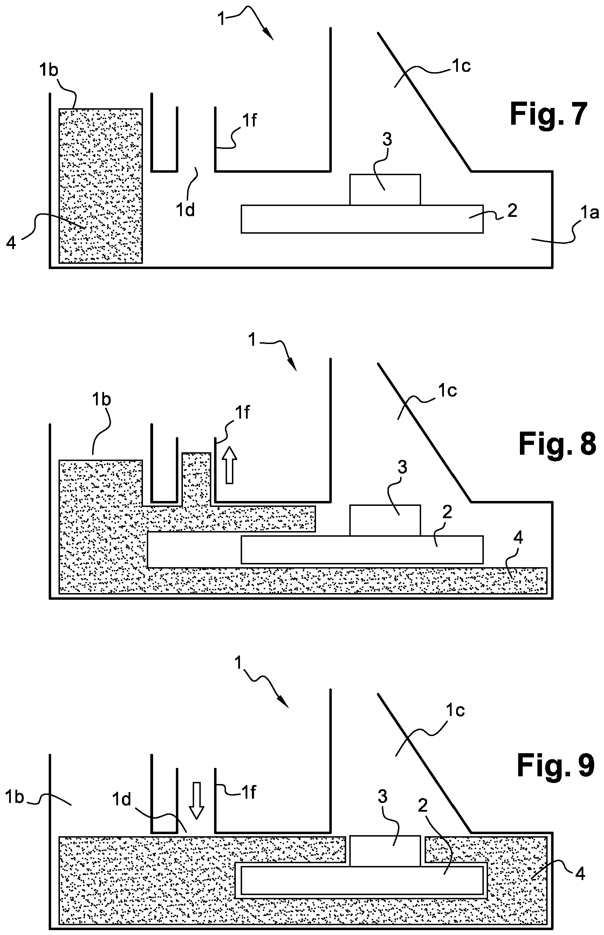

Dans un deuxième mode de réalisation, tel qu'illustré aux figures 7 à 9, sur lesquelles les éléments identiques portent les mêmes références, l'orifice de purge 1d est formé à une extrémité d'une colonne d'évent 1f du capteur 1, permettant à la résine 4 de monter par capillarité (figure 8), puis de redescendre sous l'action de la gravité (figure 9), lors de l'écoulement de la résine 4. La colonne d'évent 1f peut être de forme cylindrique. Là aussi, la présence de la ou des colonnes d'évent 1f permet un écoulement de résine 4 qui ne conduise pas à un recouvrement du composant de mesure3.

Dans ce dernier mode de réalisation, la colonne d'évent 1f permet en outre de guider un surplus de résine hors de la cavité lors de l'écoulement de la résine dans la cavité. Ce surplus de résine peut ensuite revenir dans la cavité par gravité, lorsque la résine s'est totalement écoulée du bassin dans la cavité.

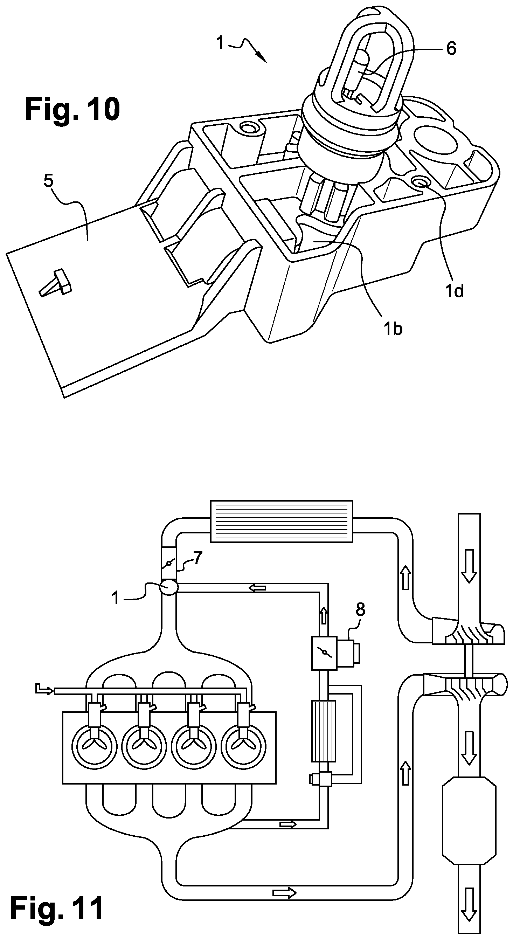

La figure 10 est une vue détaillée du capteur de mesure 1. Le capteur 1 peut comprendre une zone de connexion électrique 5 destinée à être reliée au circuit imprimé 2, ainsi qu'un capteur de température 6, qui est typiquement placé dans l'ouverture 1c.

Le capteur de mesure 1 selon l'invention peut être tout type de capteur dont des éléments sensibles doivent être recouverts de matériau d'enrobage dans une cavité fermée. Le capteur de mesure 1 peut en particulier être utilisé pour mesurer le volume d'air qui va être mélangé à l'essence dans un système de recirculation des gaz d'échappement, en aval d'un papillon d'admission d'air 7, tel qu'illustré à la figure 11. Le principe d'un système à recirculation de gaz d'échappement, également appelé EGR pour « Exhaust Gas Recirculation » en langue anglaise, consiste à prélever une partie des gaz d'échappement, comportant des gaz inertes, pour la faire recirculer dans le circuit d'admission, à l'aide d'une vanne EGR 8. La présence en zone d'admission des gaz inertes des gaz d'échappement permet de ralentir la vitesse de combustion et d'absorber les calories, et entraîne ainsi une baisse de l'émission d'oxydes d'azote.

## Revendications

1. Capteur de mesure (1), comprenant :
- au moins un composant sensible du type circuit imprimé (2) et au moins un composant de mesure (3),
- une cavité (1a) dans laquelle se situent au moins le composant sensible du type circuit imprimé (2) et le composant de mesure (3), la cavité (1a) recevant un matériau d'enrobage (4), notamment une résine, recouvrant le composant sensible (2) et laissant à découvert au moins partiellement le composant de mesure (3),
- un bassin de dépôt (1b) du matériau d'enrobage (4), communiquant avec la cavité (1a) de manière à permettre, après le dépôt du matériau d'enrobage (4) dans le bassin (1b), l'écoulement du matériau d'enrobage (4) dans la cavité (1a),
le bassin de dépôt (1b) présentant un volume choisi de manière à permettre de recevoir tout le matériau d'enrobage (4) lors du dépôt du matériau (4), le bassin (1b) étant au moins partiellement vidé à l'issue de l'écoulement du matériau d'enrobage (4) dans la cavité (1a).

2. Capteur selon la revendication 1, comprenant :
- au moins une ouverture (1c) communiquant avec la cavité (1a) et située en vis-à-vis du composant de mesure (3) pour permettre au composant de mesure (3) d'effectuer une mesure,
- au moins un orifice de purge (1d) distinct de l'ouverture (1c), situé sur le chemin d'écoulement du matériau d'enrobage (4), de manière à permettre une purge d'au moins une partie de l'air présent dans la cavité (1a) lors de l'écoulement du matériau d'enrobage (4).

3. Capteur selon la revendication 2, dans lequel le nombre d'orifices de purge (1d) est au moins égal à deux, notamment égal à 3, par exemple égal à 4.

4. Capteur selon la revendication 2 ou 3, dans lequel le diamètre de l'orifice de purge (1d) est compris entre 0.5mm et 3mm.

5. Capteur selon l'une des revendications 2 à 4, dans lequel l'orifice de purge (1d) est formé à une extrémité d'une colonne d'évent (1f) du capteur (1), permettant au matériau d'enrobage (4) de monter par capillarité lors de l'écoulement du matériau d'enrobage (4).

6. Capteur selon l'une des revendications 2 à 4, dans lequel l'orifice de purge (1d) est formé par une paroi (1e), notamment plane, du capteur (1).

7. Capteur selon une des revendications 1 à 6, dans lequel le composant de mesure (3) est un capteur de pression (3).

8. Capteur selon une des revendications 1 à 7, comprenant en outre un connecteur électrique (5) relié au circuit imprimé (2).

9. Capteur selon l'une des revendications 1 à 8, dans lequel le bassin de dépôt (1b) débouche dans une extrémité latérale de la cavité (1a), de manière à permettre un écoulement latéral horizontal du matériau d'enrobage (4) dans la cavité (1a) après son injection.

10. Capteur selon l'une des revendications 1 à 9, comprenant en outre une zone d'évacuation d'air (1c) communiquant avec la cavité (1a).

11. Capteur selon l'une des revendications 1 à 10, comprenant en outre un capteur de température (6).

12. Capteur selon l'une des revendications 1 à 11, dans lequel le volume du bassin de dépôt (1b) est compris entre compris entre 50 mm³ et 5000 mm³, et notamment entre 500 mm³ et 2000 mm³, notamment entre 850 mm³ et 1 200 mm³.

13. Capteur selon l'une des revendications 1 à 12, dans lequel le bassin de dépôt (1b) est séparé de la cavité (1a) par une cloison perforée.

14. Capteur selon l'une des revendications 1 à 13, dans lequel en fin d'écoulement du matériau d'enrobage (4), une partie de ce matériau (4) reste dans le fond du bassin de dépôt (1b).

15. Capteur selon l'une des revendications 1 à 14, dans lequel le bassin de dépôt (1b) est en forme de cheminée munie de parois verticales et présentant une ouverture dans sa partie inférieure qui débouche dans la cavité (1a).

16. Procédé de remplissage en matériau d'enrobage d'un capteur de mesure (1) selon l'une des revendications 1 à 15, comprenant l'injection de matériau d'enrobage (4) dans le bassin de dépôt (1b).

17. Procédé selon la revendication 16, comprenant, postérieurement à l'étape d'injection de matériau d'enrobage (4), une étape d'écoulement du matériau d'enrobage (4) dans la cavité (1a), conduisant à une position d'équilibre du matériau d'enrobage (4) dans laquelle le matériau d'enrobage (4) recouvre chaque composant sensible (2) sans recouvrir le ou les composants de mesure (3), puis une étape de durcissement du matériau d'enrobage (4).

## Patentansprüche

1. Messsensor (1), umfassend:
- mindestens eine sensible Komponente vom Typ Leiterplatte (2) und mindestens eine Messkomponente (3),
- einen Hohlraum (1a), in dem sich mindestens die sensible Komponente vom Typ Leiterplatte (2) und die Messkomponente (3) befinden, wobei der Hohlraum (1a) ein Ummantelungsmaterial (4), insbesondere ein Harz, aufnimmt, das die sensible Komponente (2) bedeckt und die Messkomponente (3) zumindest teilweise unbedeckt lässt,
- ein Aufnahmebecken (1b) des Ummantelungsmaterials (4), das mit dem Hohlraum (1a) verbunden ist, um nach der Ablagerung des Ummantelungsmaterials (4) in dem Becken (1b) das Abfließen des Ummantelungsmaterials (4) in den Hohlraum (1a) zu ermöglichen,
wobei das Aufnahmebecken (1b) ein Volumen aufweist, das derart gewählt ist, dass es möglich ist, das gesamte Ummantelungsmaterial (4) bei der Ablagerung des Materials (4) aufzunehmen, wobei das Becken (1b) zumindest teilweise nach dem Abfließen des Ummantelungsmaterials (4) in den Hohlraum (1a) geleert wird.

2. Sensor nach Anspruch 1, umfassend:
- mindestens eine Öffnung (1c), die mit dem Hohlraum (1a) in Verbindung steht und sich gegenüber der Messkomponente (3) befindet, um es der Messkomponente (3) zu ermöglichen, eine Messung durchzuführen,
- mindestens eine Ableitungsöffnung (1d), die von der Öffnung (1c) verschieden ist, die sich auf dem Fließweg des Ummantelungsmaterials (4) befindet, um eine Ableitung zumindest eines Teils der in dem Hohlraum (1a) vorhandenen Luft beim Abfließen des Ummantelungsmaterials (4) zu ermöglichen.

3. Sensor nach Anspruch 2, bei dem die Anzahl von Ableitungsöffnungen (1d) mindestens gleich zwei, insbesondere gleich 3, beispielsweise gleich 4 ist.

4. Sensor nach Anspruch 2 oder 3, bei dem der Durchmesser der Ableitungsöffnung (1d) zwischen 0,5 mm und 3 mm beträgt.

5. Sensor nach einem der Ansprüche 2 bis 4, bei dem die Ableitungsöffnung (1d) an einem Ende eines Belüftungsrohrs (1f) des Sensors (1) ausgebildet ist, das es dem Ummantelungsmaterial (4) ermöglicht, durch Kapillarität beim Abfließen des Ummantelungsmaterials (4) aufzusteigen.

6. Sensor nach einem der Ansprüche 2 bis 4, bei dem die Ableitungsöffnung (1d) von einer insbesondere ebenen Wand (1e) des Sensors (1) gebildet ist.

7. Sensor nach einem der Ansprüche 1 bis 6, bei dem die Messkomponente (3) ein Drucksensor (3) ist.

8. Sensor nach einem der Ansprüche 1 bis 7, ferner umfassend einen elektrischen Schalter (5), der mit der Leiterplatte (2) verbunden ist.

9. Sensor nach einem der Ansprüche 1 bis 8, bei dem das Aufnahmebecken (1b) in ein seitliches Ende des Hohlraums (1a) mündet, um ein horizontales seitliches Abfließen des Ummantelungsmaterials (4) in den Hohlraum (1a) nach seinem Einspritzen zu ermöglichen.

10. Sensor nach einem der Ansprüche 1 bis 9, ferner umfassend eine Luftableitungszone (1c), die mit dem Hohlraum (1a) in Verbindung steht.

11. Sensor nach einem der Ansprüche 1 bis 10, ferner umfassend einen Temperatursensor (6).

12. Sensor nach einem der Ansprüche 1 bis 11, bei dem das Volumen des Aufnahmebeckens (1b) zwischen 50 mm³ und 5000 mm³ und insbesondere zwischen 500 mm³ und 2000 mm³, vor allem zwischen 850 mm³ und 1200 mm³, liegt.

13. Sensor nach einem der Ansprüche 1 bis 12, bei dem das Aufnahmebecken (1b) von dem Hohlraum (1a) durch eine perforierte Trennwand getrennt ist.

14. Sensor nach einem der Ansprüche 1 bis 13, bei dem nach dem Abfließen des Ummantelungsmaterials (4) ein Teil dieses Materials (4) am Boden des Aufnahmebeckens (1b) verbleibt.

15. Sensor nach einem der Ansprüche 1 bis 14, bei dem das Aufnahmebecken (1b) die Form eines Kamins hat, der mit vertikalen Wänden versehen ist und eine Öffnung in seinem unteren Teil aufweist, die in den Hohlraum (1a) mündet.

16. Verfahren zum Füllen eines Messsensors (1) nach einem der Ansprüche 1 bis 15 mit Ummantelungsmaterial, umfassend das Einspritzen von Ummantelungsmaterial (4) in das Aufnahmebecken (1b).

17. Verfahren nach Anspruch 16, umfassend nach dem Schritt des Einspritzens von Ummantelungsmaterial (4) einen Schritt des Abfließens des Ummantelungsmaterials (4) in den Hohlraum (1a), was zu einer Ausgleichsposition des Ummantelungsmaterials (4) führt, in der das Ummantelungsmaterial (4) jede sensible Komponente (2) bedeckt, ohne die Messkomponente(n) (3) zu bedecken, dann einen Schritt des Härtens des Ummantelungsmaterials (4).

## Claims

1. Measuring sensor (1), comprising:
- at least one PCB sensing component (2) and at least one measuring component (3);
- a cavity (1a) in which at least the PCB sensing component (2) and the measuring component (3) are located, the cavity (1a) receiving a potting material (4), in particular a resin, that covers the sensing component (2) and leaves the measuring component (3) at least partially uncovered; and
- a reservoir (1b) for deposition of the potting material (4) and that communicates with the cavity (1a) so as to allow, after the potting material (4) has been deposited in the reservoir (1b), the potting material (4) to flow into the cavity (1a), the deposition reservoir (1b) having a volume chosen so as to allow all the potting material (4) to be received during the deposition of the material (4), the reservoir (1b) being at least partially emptied at the end of the flow of the potting material (4) into the cavity (1a).

2. Sensor according to Claim 1, comprising:
- at least one aperture (1c) communicating with the cavity (1a) and located facing the measuring component (3) in order to allow the measuring component (3) to perform a measurement; and
- at least one purge orifice (1d) that is distinct from the aperture (1c) and that is located on the flow path of the potting material (4) so as to allow at least some of the air present in the cavity (1a) to be purged during the flow of the potting material (4).

3. Sensor according to Claim 2, wherein the number of purge orifices (1d) is at least equal to two, in particular equal to 3, and for example equal to 4.

4. Sensor according to Claim 2 or 3, wherein the diameter of the purge orifice (1d) is comprised between 0.5 mm and 3 mm.

5. Sensor according to one of Claims 2 to 4, wherein the purge orifice (1d) is formed at one end of a vent column (1f) of the sensor (1), allowing the potting material (4) to rise via capillary action during the flow of the potting material (4).

6. Sensor according to one of Claims 2 to 4, wherein the purge orifice (1d) is formed by an in particular planar wall (1e) of the sensor (1).

7. Sensor according to one of Claims 1 to 6, wherein the measuring component (3) is a pressure sensor (3).

8. Sensor according to one of Claims 1 to 7, furthermore comprising an electrical connector (5) connected to the PCB (2).

9. Sensor according to one of Claims 1 to 8, wherein the deposition reservoir (1b) opens onto a lateral end of the cavity (1a) so as to allow a horizontal lateral flow of the potting material (4) into the cavity (1a) after its injection.

10. Sensor according to one of Claims 1 to 9, furthermore comprising a zone (1c) for expelling air, communicating with the cavity (1a).

11. Sensor according to one of Claims 1 to 10, furthermore comprising a temperature sensor (6).

12. Sensor according to one of Claims 1 to 11, wherein the volume of the deposition reservoir (1b) is comprised between 50 mm³ and 5000 mm³, and in particular between 500 mm³ and 2000 mm³, in particular between 850 mm³ and 1200 mm³.

13. Sensor according to one of Claims 1 to 12, wherein the deposition reservoir (1b) is separated from the cavity (1a) by a drilled partition.

14. Sensor according to one of Claims 1 to 13, wherein at the end of the flow of the potting material (4) some of this material (4) remains in the bottom of the deposition reservoir (1b).

15. Sensor according to one of Claims 1 to 14, wherein the deposition reservoir (1b) takes the form of a chimney provided with vertical walls and having in its lower portion an aperture that opens onto the cavity (1a).

16. Method for filling with potting material a measuring sensor (1) according to one of Claims 1 to 15, comprising injecting the potting material (4) into the deposition reservoir (1b).

17. Method according to Claim 16, comprising, after the step of injecting potting material (4), a step in which the potting material (4) is made to flow into the cavity (1a), causing the potting material (4) to reach an equilibrium position in which the potting material (4) covers each sensing component (2) without covering the one or more measuring component (3), and then a step in which the potting material (4) is set.
